## Europäisches Patentamt
## European Patent Office
## Office européen des brevets

(11) Veröffentlichungsnummer: **0 164 689**
**A2**

(12) **EUROPÄISCHE PATENTANMELDUNG**

(21) Anmeldenummer: 85106941.9

(22) Anmeldetag: 04.06.85

(51) Int. Cl.⁴: **H 04 L 11/00**
G 06 F 13/38, H 03 M 9/00

(30) Priorität: 04.06.84 DE 3420787

(43) Veröffentlichungstag der Anmeldung:
18.12.85 Patentblatt 85/51

(84) Benannte Vertragsstaaten:
AT BE CH DE LI NL

(71) Anmelder: Siemens Aktiengesellschaft
Berlin und München Wittelsbacherplatz 2
D-8000 München 2(DE)

(72) Erfinder: Wolff, Pieter
Wilhelm-Busch-Strasse 18
D-8000 München 71(DE)

(72) Erfinder: Wedler, Hartmut, Dipl.-Ing.
Ludwig-Braille-Strasse 7
D-8000 München 70(DE)

(54) Schaltungsanordnung zur Aufnahme und/oder zur Abgabe von auf einer Mehrzahl von Leitungen seriell auftretenden Binärsignalen in bzw. von einer einen Mikrocomputer bzw. Mikroprozessor enthaltenden Verarbeitungseinrichtung.

(57) Zur Aufnahme und/oder Abgabe von auf einer Mehrzahl von Leitungen seriell auftretenden Binärsignalen in bzw. von einer einen Mikrocomputer bzw. Mikroprozessor (MC) enthaltenden Verarbeitungseinrichtung sind die seriell auftretenden Binärsignale führende Signalaufnahmeleitungen (e1 bis e3) über individuelle bistabile Kippglieder (Ke1 bis Ke3) an der Eingangsseite des Mikrocomputers bzw. Mikroprozessors (MCI) angeschlossen, und Signalabgabeleitungen (a1 bis a3) sind über individuelle bistabile Kippglieder (Ka1 bis Ka3) an der Ausgangsseite des Mikrocomputers bzw. Mikroprozessors (MCI) angeschlossen. In dem Mikrocomputer bzw. Mikro prozessor (MCI) werden die seriell auftretenden Binärsignale für eine Verarbeitung als Parallelsignale in Speichern/Registern (Reg) aufgenommen und nach Erreichen einer vorgegebenen Anzahl an Aufnahmeregister (Tg) für die nachfolgende Verarbeitung weitergegeben; die verarbeiteten Parallelsignale werden wieder in serielle Signale für eine Signalabgabe umgesetzt.

./...

SIEMENS AKTIENGESELLSCHAFT
Berlin und München

Unser Zeichen
VPA 84 P 1 4 2 4 E

Auslandsfassung

**Schaltungsanordnung zur Aufnahme und/oder zur Abgabe von auf einer Mehrzahl von Leitungen seriell auftretenden Binärsignalen in bzw. von einer einen Mikrocomputer bzw. Mikroprozessor enthaltenden Verarbeitungseinrichtung.**

Die Erfindung bezieht sich auf eine Schaltungsanordnung, wie sie im Oberbegriff des Anspruchs 1 angegeben ist.

Die derzeit üblicherweise in Verarbeitungseinrichtungen verwendeten Mikrocomputer bzw. Mikroprozessoren sind so ausgelegt, daß sie Binärsignale jeweils in Form von Parallelsignalen zu verarbeiten vermögen. Wenn ein serieller Datenstrom aufzunehmen bzw. abzugeben ist, werden zwischen den entsprechenden Empfangsleitungen bzw. Sendeleitungen und dem jeweiligen Mikrocomputer bzw. Mikroprozessor gesonderte Schnittstellenbausteine eingesetzt. Ein derartiger Schnittstellenbaustein ist beispielsweise ein universeller Synchron/Asynchron-Sender/Empfänger-Baustein, der auch als USART-Baustein bekannt ist. Solch ein Schnittstellenbaustein meldet dem mit ihm verbundenen Mikrocomputer bzw. Mikroprozessor, wenn er ein neues Parallelsignal bzw. -zeichen für die Übertragung annehmen oder ein solches Zeichen bzw. Parallelsignal an den Mikrocomputer bzw. Mikroprozessor abgeben kann. Auf diese Weise lassen sich zwar mit Hilfe eines Mikrocomputers bzw. Mikroprozessors Binärsignale verarbeiten, die über eine Vielzahl von für eine serielle

1.6.84/Nt 1 Kel

Signalübertragung ausgelegten Leitungen zugeführt bzw. weitergeleitet werden. Von Nachteil dabei ist jedoch, daß der mit der Bereitstellung derartiger Schnittstellenbausteine verknüpfte Aufwand relativ hoch ist. Hinzu kommt noch, daß die Preise derartiger Schnittstellenbausteine in der Größenordnung der Preise für Mikroprozessoren liegen.

Der Erfindung liegt demgemäß die Aufgabe zugrunde, bei einer Schaltungsanordnung der eingangs genannten Art mit relativ geringem schaltungstechnischen Aufwand auf einer Mehrzahl von Empfangsleitungen mit unterschiedlichen Phasenlagen ihrer Wortgrenzen seriell auftretende Binärsignale simultan für die Verarbeitung durch den Mikrocomputer bzw. Mikroprozessor zu erfassen bzw. im Mikrocomputer bzw. Mikroprozessor mehrfach angebotene Parallelsignale in Form von seriell auftretenden Binärsignalen gleichzeitig über mehrere Sendeleitungen abzugeben.

Gelöst wird die vorstehend aufgezeigte Aufgabe erfindungsgemäß durch eine Schaltungsanordnung, wie sie im Anspruch 1 gekennzeichnet ist.

Die Erfindung bringt den Vorteil mit sich, daß mit einem besonders geringen schaltungstechnischen Aufwand ausgekommen werden kann, um auf einer Mehrzahl von Empfangsleitungen mit unterschiedlichen Phasenlagen ihrer Wortgrenzen seriell auftretende Binärsignale für eine einen Mikrocomputer bzw. Mikroprozessor enthaltende Verarbeitungseinrichtung aufnehmen zu können, welche lediglich Parallelsignale zu verarbeiten vermag, und/oder von dieser Verarbeitungseinrichtung Binärsignale seriell über eine Vielzahl von Sendeleitungen abgeben zu können. Gemäß der Erfindung wird für die Signalaufnahmeeinrichtungen und die Signalabgabeeinrichtungen mit einfachen Kippschaltungen ausgekommen; die Verwendung von relativ aufwendigen Schnittstellenbausteinen, wie sie üblicherweise in Verbindung mit Mikrocomputern bzw. Mikroprozessoren verwendet werden, ist hier also entbehrlich.

Zweckmäßigerweise sind die die Signalabgabeeinrichtungen bildenden bistabilen Kippglieder mit ihren Signaleingängen an einzelne Ausgänge des Mikrocomputers bzw. Mikroprozessors angeschlossen, welche durch individuelle Aktivierung jeweils einzeln mit dem genannten Ausgabespeicher bzw. Ausgaberegister verbindbar sind. Hierdurch ergibt sich der Vorteil eines besonders geringen schaltungstechnischen Aufwands für die Verbindung der Signalabgabeeinrichtungen mit dem Mikrocomputer bzw. Mikroprozessor.

Vorzugsweise ist eine mit der Ausgangsseite der die Signalaufnahmeeinrichtungen bildenden bistabilen Kippglieder verbundene Auswahlschaltung durch eine Multiplexerschaltung gebildet, welche durch eine Steuerschaltung gesteuert jeweils nur eines der betreffenden bistabilen Kippglieder mit der Eingangsseite des Mikrocomputers bzw. Mikroprozessors wirksam verbindet. Hierdurch ergibt sich der Vorteil eines relativ geringen schaltungstechnischen Aufwands für die Verbindung der einzelnen Signalaufnahmeeinrichtungen mit dem Mikrocomputer bzw. Mikroprozessor.

Anhand einer Zeichnung wird die Erfindung nachstehend beispielsweise näher erläutert.

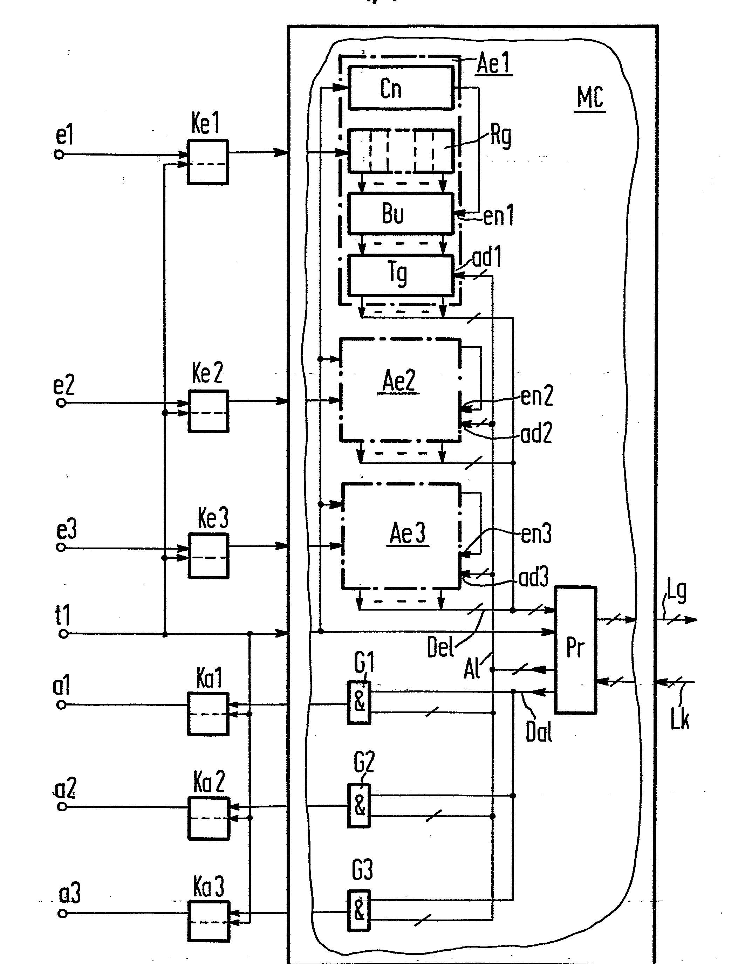

In der Zeichnung ist schematisch eine Schaltungsanordnung gezeigt, die eine Mehrzahl von Signalaufnahmeleitungen, nämlich im vorliegenden Fall drei Signalaufnahmeleitungen e1, e2, e3 und eine Mehrzahl von Signalabgabeleitungen, nämlich im vorliegenden Fall drei Signalabgabeleitungen a1,

0164689

a2 und a3, aufweist. Über sämtliche Leitungen, die Datensignalleitungen entsprechend der CCITT-Empfehlung X.21 sein können, werden die einzelnen Bits der Datenwörter bzw. -signale bildenden Binärsignale jeweils mit ein und derselben Frequenz seriell übertragen. Die einzelnen Wortgrenzen können dabei allerdings mit unterschiedlichen Phasenlagen auftreten. Den Signalaufnahmeleitungen e1 und e3 sind im vorliegenden Fall durch einzelne bistabile Kippglieder gebildete Signalaufnahmeeinrichtungen individuell zugehörig. Der Signalaufnahmeleitung e1 ist das bistabile Kippglied Ke1 zugehörig, der Signalaufnahmeleitung e2 ist das bistabile Kippglied Ke2 zugehörig, der Signalaufnahmeleitung e3 ist das bistabile Kippglied Ke3 zugehörig. Diese bistabilen Kippglieder sind taktgesteuerte Kippglieder, die mit ihren Takteingängen gemeinsam an einem Taktanschluß t1, der den Bittakt liefert, angeschlossen sind und deren Signaleingänge mit den erwähnten Signalaufnahmeleitungen e1, e2 bzw. e3 verbunden sind.

Den Signalabgabeleitungen a1, a2, a3 sind individuell Signalabgabeeinrichtungen in Form von einzelnen bistabilen Kippgliedern Ka1, Ka2, Ka3 zugehörig. Die betreffenden Signalabgabeleitungen sind dabei mit den Ausgängen der erwähnten bistabilen Kippglieder verbunden. Diese Kippglieder sind ebenfalls taktgesteuerte Kippglieder, die mit ihren Takteingängen gemeinsam an dem bereits erwähnten Taktanschluß t1 angeschlossen sind. Mit ihren Signaleingängen sind die betreffenden bistabilen Kippglieder Ka1, Ka2, Ka3 an gesonderten    Ausgängen eines zu einer Verarbeitungseinrichtung gehörenden Mikrocomputers bzw. Mikroprozessors MC angeschlossen.

Der erwähnte Mikrocomputer bzw. Mikroprozessor MC ist mit gesonderten    Eingängen mit den Ausgängen der die bereits erwähnten Signalaufnahmeeinrichtungen bildenden bistabilen Kippglieder Ke1, Ke2, Ke3 verbunden.

Die gerade erwähnten Ausgänge und Eingänge des Mikrocomputers bzw. Mikroprozessors MC können jeweils ein gesonderter Anschluß (Port) des betreffenden Mikrocomputers bzw. Mikroprozessors MC sein. Es ist aber auch möglich, von den üblicherweise für eine Datensignalübertragung zur Verfügung stehenden Datenanschlüssen eines Mikrocomputers bzw. Mikroprozessors jeweils lediglich einen einzigen Anschluß als Ausgang bzw. Eingang zu verwenden. In diesem Falle würde ein in der Zeichnung nicht dargestellter Multiplexer zwischen den Kippgliedern auf der einen und dem Mikrocomputer bzw. Mikroprozessor auf der anderen Seite in beiden Übertragungsrichtungen die erforderliche Umsetzung vornehmen.

Bezüglich des zu einer Verarbeitungseinrichtung gehörenden und in der Zeichnung gezeigten Mikrocomputers bzw. Mikroprozessors MC ist unter anderem ein zentraler Prozessorteil Pr angedeutet, der ebenfalls mit der Taktleitung t1 für den Bittakt verbunden sein mag und der mit Paralleleingängen und -ausgängen an zu Signalaufnahmeeinrichtungen Ae1 bis Ae3 gehörenden internen Registern Rg angeschlossen ist. Von den Signalaufnahmeeinrichtungen, die in einer der Anzahl der bistabilen Kippglieder Ke1 bis Ke3 entsprechenden Anzahl vorgesehen sein mögen, ist lediglich die Signalaufnahmeeinrichtung Ae1 in ihrem Aufbau näher veranschaulicht. Sie weist neben dem erwähnten Register Rg, das auch durch einen internen Speicher des Mikrocomputers gebildet sein kann, einen Zähler Cn auf, der eingangsseitig mit dem Bittakt von dem Taktanschluß t1 her versorgt wird und der die dort auftretenden Impulse

0164689

zählt. Mit den Ausgängen der Registerstufen des Registers Rg sind Eingänge einer Übernahmeschaltung Bu verbunden, die beispielsweise durch eine Mehrzahl von UND-Gliedern gebildet sein mag. Ein Freigabeeingang en1 dieser Übernahmeschaltung Bu ist am Ausgang des zugehörigen Zählers Cn angeschlossen. Mit ihren Ausgängen ist die Übernahmeschaltung Bu an Eingängen eines Aufnahme- bzw. Übernahmeregisters Tg angeschlossen, welches ausgangsseitig an einer als Datenbusleitung bezeichneten Busleitung Del angeschlossen ist, die eine Mehrzahl von Einzelleitungen, beispielsweise acht Einzelleitungen, aufweisen mag. An dieser Busleitung Del sind im übrigen entsprechende Ausgänge sämtlicher Signalaufnahmeeinrichtungen Ae1 bis Ae3 angeschlossen.

Der Zähler Cn der Signalaufnahmeeinrichtung Ae1 zählt die Anzahl der in das zugehörige Register Rg seriell eingeschriebenen Bits; er gibt nach Erreichen einer vorgegebenen bestimmten Anzahl von z.B. acht Bits ein Freigabe-Steuersignal an die zugehörige Übernahmeschaltung Bu ab. Diese Übernahmeschaltung Bu gestattet damit den Inhalt des Registers Rg in das Übernahmebzw. Aufnahmeregister Tg zu übertragen. Damit stehen die zuvor in dem Register Rg aufgesammelten Bits in der vorgegebenen bestimmten Anzahl nunmehr in dem Übernahmeregister Tg für eine weitere Verarbeitung zur Verfügung, währenddessen in dem Register Rg weitere Bits aufgesammelt werden können. Diese Verarbeitung muß erfolgen, bevor weitere Bits dem Übernahme- bzw. Aufnahmeregister Tg zugeführt werden.

Den vorstehend erläuterten Vorgängen völlig entsprechende Vorgänge laufen in den übrigen Signalaufnahmeeinrichtungen Ae2, Ae3 ab. Bezüglich dieser Signalaufnahmeeinrichtungen sind lediglich die Freigabeeingänge en2 und en3 mit ihren Freigabe-Signalverbindungen und die eingangsseitigen Verbindungen veranschaulicht.

Die erwähnte Busleitung Del, an der die Ausgänge sämtlicher Signalaufnahmeeinrichtungen Ae1 bis Ae3 angeschlossen sind, sind mit der Eingangsseite des bereits erwähnten Prozessorteils Pr verbunden. Der betreffende Prozessorteil Pr vermag über diese Busleitung Del auftretende Signale, die beispielsweise jeweils acht Bits umfassen mögen, aufzunehmen. Um diese Aufnahme zu bewirken, müssen die einzelnen Signalaufnahmeeinrichtungen Ae1, Ae2, Ae3 gesondert angesteuert bzw. adressiert werden. Dies geschieht von dem Prozessorteil Pr aus über eine gesonderte Adreßbusleitung Al, mit der Adressierungseingänge ad1, ad2, ad3 sämtlicher Signalaufnahmeeinrichtungen Ae1, Ae2 bzw. Ae3 verbunden sind. Die Anordnung mag dabei so getroffen sein, daß durch eine auf der Adreßbusleitung Al auftretende Adresse jeweils nur eine der Signalaufnahmeeinrichtungen Ae1, Ae2, Ae3 adressiert ist. Dies bedeutet, daß jeweils nur eines der dem Übernahmeregister Tg entsprechenden Übernahmeregister für eine wirksame Signalabgabe angesteuert ist.

Mit der gerade erwähnten Adreßbusleitung Al sind noch gesonderte Verknüpfungsglieder G1, G2, G3 eingangsseitig verbunden. Die Anordnung mag dabei so getroffen sein, daß diese Verknüpfungsglieder, die durch mehrere Eingänge aufweisende UND-Glieder gebildet sein mögen, auf unterschiedliche Adressen anzusprechen vermögen. Dabei ist es möglich, daß jedes dieser Verknüpfungsglieder auf eine Adresse anspricht, die auch zur Adresierung einer der Signalaufnahmeeinrichtungen Ae1 bis Ae3 führt.

Die Verknüpfungsglieder G1, G2, G3 sind mit weiteren Eingängen gemeinsam am Ausgang einer Signalabgabeleitung Dal des Prozessorteiles Pr angeschlossen. Auf dieser Leitung Dal mögen Signalbits seriell auftreten. Da der Prozessorteil Pr lediglich Parallelsignale abzugeben vermag, wird in die Verbindung zur Eingangsseite des jeweiligen Verknüpfungsgliedes G1, G2, G3 hin noch ein zu einer Parallel-Serien-Umsetzung dienendes Register eingefügt sein, und zwar entsprechend dem Register Rg.

Die Ausgänge der Verknüpfungsglieder G1, G2, G3 sind mit Signaleingängen von bistabilen Kippgliedern Ka1, Ka2 bzw. Ka3 verbunden. Diese bistabilen Kippglieder sind mit Takteingängen gemeinsam an dem bereits erwähnten Taktanschluß t1 angeschlossen. Mit ihren Signalausgängen sind die betreffenden bistabilen Kippglieder Ka1, Ka2 und Ka3 an Signalabgabeleitungen bzw. -anschlüssen a1, a2, a3 angeschlossen.

Der Prozessorteil Pr, der das in einem Mikroprozessor unter anderem vorhandene Rechenwerk ALU umfassen mag, ist mit weiteren Leitungen Lg, Lk verbunden, über die Parallelsignale abgebbar bzw. aufnehmbar sind. An dieser Stelle sei angemerkt, daß die in der Zeichnung jeweils durch einen Querstrich markierten Leitungen Parallelleitungen oder Busleitungen sind, die jeweils eine Mehrzahl von Einzelleitungen, wie beispielsweise jeweils acht Einzelleitungen, umfassen mögen.

Durch den vorstehend betrachteten, in der Zeichnung dargestellten Schaltungsaufbau ist sichergestellt, daß die auf den Signalaufnahmeleitungen e1, e2, e3 mit unterschiedlicher Phasenlage auftretenden binären Signale - die annahmegemäß alle mit derselben Frequenz

0164689

auftreten - in zugehörigen Signalaufnahmeeinrichtungen Ae1 bis Ae3 taktgesteuert aufgenommen werden, ohne daß es zu einem Signalverlust kommt. Die Verarbeitung und die Abgabe der betreffenden binären Signale ist ebenfalls durch die taktgesteuerte Übernahme der in den einzelnen Signalaufnahmeeinrichtungen zuvor gesammelten und anschließend in deren Aufnahmeregistern bereitgestellten Datensignalbits durch den Prozessorteil Pr sichergestellt. Die erwähnte Taktsteuerung des Prozessorteils Pr und damit des gesamten Mikroprozessors bzw. Mikrocomputers MC erfolgt an einen Steuereingang, bei dem es sich um einen normalen Steuereingang oder Unterbrechungs-(interrupt)-Eingang des betreffenden Mikrocomputers bzw. Mikroprozessors MC handeln mag.

Abschließend sei noch angemerkt, daß gemäß der Erfindung die auf einer Mehrzahl oder allen der vorhandenen Signalaufnahmeleitungen auftretenden Signale bzw. Signalgruppen in dem Mikroprozessor bzw. Mikrocomputer MC gemeinsam, d. h. in Kombination miteinander verarbeitet werden können, ohne daß eine vorgegebene Zeitbeziehung zwischen den betreffenden Signalen verloren geht.

Patentansprüche

1. Schaltungsanordnung zur Aufnahme von auf einer Mehrzahl von Signalaufnahmeleitungen (e1, e2, e3) seriell auftretenden Binärsignalen und Verarbeitung dieser Binärsignale in Form von jeweils eine vorgegebene Anzahl von Bits umfassenden Parallelsignalen und/oder zur Abgabe von seriell auftretenden Binärsignalen über einzelne Signalabgabeleitungen (a1, a2, a3) nach zuvor erfolgter Verarbeitung von jeweils die vorgegebene Anzahl von Bits umfassenden Parallelsignalen in bzw. von einer einen Mikrocomputer bzw. Mikroprozessor (MC) enthaltenden Verarbeitungseinrichtung, die eingangs- und/oder ausgangsseitig über Signalaufnahme- bzw. Signalabgabeeinrichtungen (Ke1 bis Ke3, Ka1 bis Ka3) mit den Signalaufnahme- bzw. Signalabgabeleitungen (e1 bis e3; a1 bis a3) verbunden ist,

d a d u r c h   g e k e n n z e i c h n e t ,
daß die Signalaufnahmeeinrichtungen durch den Signalaufnahmeleitungen (e1 bis e3) individuell zugehörige bistabile Kippglieder (Ke1 bis Ke3) gebildet sind, welche taktgesteuert die auf den einzelnen Signalaufnahmeleitunge n (e1 bis e3) auftretenden Bits aufnehmen und die betreffenden Bits ausgangsseitig an die Eingangsseite des ebenfalls taktgesteuerten Mikrocomputers bzw. Mikroprozessors (MC) abzugeben gestatten,
daß der Eingangsseite des Mikrocomputers bzw. Mikroprozessors (MC) ein oder mehrere interne Speicher bzw. Register (Rg) zum taktgesteuerten Aufsammeln einer in ihrer Reihenfolge vorgegebenen bestimmten Anzahl von seriell auftretenden Bits in einzelnen Speicher- bzw. Registerzellen zugeordnet sind,
daß die so aufgesammelten Bits nach Erreichen der genannten bestimmten Anzahl an ein zugehöriges Aufnahmeregister (Tg) für eine weitere Verarbeitung weitergeleitet werden.

und daß die Signalabgabeeinrichtungen durch einzelne, ebenfalls taktgesteuerte bistabile Kippglieder (Ka1 bis Ka3) gebildet sind, welche ausgangsseitig jeweils direkt mit den einzelnen Signalabgabeleitungen (a1 bis a3) verbunden sind und welche eingangsseitig die von der Ausgangsseite des Mikrocomputers bzw. Mikroprozessors (MC) seriell bereitgestellten Bits aufnehmen, die aus einzelnen Speicher- bzw. Registerzellen eines in dem Mikrocomputer bzw. Mikroprozessor (MC) als Abgabespeicher bzw. Abgaberegister vorgesehenen internen Speichers bzw. Registers abgegeben werden, der bzw. das auf entsprechende Verarbeitungsvorgänge hin Parallelsignale zugeführt erhält.

2. Schaltungsanordnung nach Anspruch 1,
d a d u r c h   g e k e n n z e i c h n e t ,
daß die die Signalabgabeeinrichtungen bildenden bistabilen Kippglieder (Ka1 bis Ka3) mit ihren Signaleingängen an einzelne Ausgänge des Mikrocomputers bzw. Mikroprozessors (MC) angeschlossen sind, welche durch individuelle Aktivierung jeweils einzeln mit dem genannten Ausgabespeicher bzw. -register verbindbar sind.

3. Schaltungsanordnung nach Anspruch 1,
d a d u r c h   g e k e n n z e i c h n e t ,
daß eine mit der Ausgangsseite der die Signalaufnahmeeinrichtungen bildenden bistabilen Kippglieder (Ke1 bis Ke3) verbundene Auswahlschaltung durch eine Multiplexerschaltung gebildet ist, welche durch eine Steuerschaltung gesteuert jeweils nur eines der betreffenden bistabilen Kippglieder (Ke1 bis Ke3) mit der Serien-Eingangsseite des Mikrocomputers bzw. Mikroprozessors (MC) wirksam verbindet.

1/1